# EUROPÄISCHE PATENTSCHRIFT

(11) **EP 1 510 371 B1**
(45) Veröffentlichungstag und Bekanntmachung des Hinweises auf die Patenterteilung: **23.04.2008**
(21) Anmeldenummer: 04020138.6
(22) Anmeldetag: 25.08.2004
(51) Int. Cl.: B60C 23/04

(54) **Rad für Fahrzeuge mit Luftreifen und Anordnung aus einem Ventil, einer Vorrichtung zum Messen des Reifendrucks und einer sie im Luftreifen haltenden Feder**
Wheel for vehicles with pneumatic tires and arrangement comprising a valve, an apparatus for messuring tire pressure and a spring holding it in the pneumatic tire
Roue pour véhicules avec des pneumatiques et ensemble constitué d'une valve, d'un appareil pour mesurer la pression d'un pneumatique ainsi que d'un ressort pour fixer l'appareil de messure dans le pneumatique

(30) Priorität: 25.08.2003 DE 10339959
(43) Veröffentlichungstag der Anmeldung: 02.03.2005
(73) Patentinhaber: Beru Aktiengesellschaft, 71636 Ludwigsburg (DE)
(72) Erfinder: Graf, Bernhard, 71691 Freiberg (DE); Kasimirski, Hans Peter, 71640 Ludwigsburg (DE)
(74) Vertreter: Twelmeier Mommer & Partner

(56) Entgegenhaltungen:
- EP-A- 1 386 759
- DE-A- 10 047 853
- DE-A- 10 131 411

## Beschreibung

Die Erfindung geht aus von einer Anordnung mit den im Oberbegriff des Anspruchs 1 angegebenen Merkmalen und von einem Rad mit den im Oberbegriff des Anspruchs 18 angegebenen Merkmalen. Eine derartige Anordnung ist aus der nach veröfientlichten EP 1 386 759 A1 bekannt.

Aus der DE 101 31 411 A1ist eine Anordnung aus einer Vorrichtung zum Messen des Reifendrucks in einem Luftreifen bekannt, welche sich in einem Gehäuse befindet, das nach der Montage des Luftreifens auf einem Rad im Luftreifen zu liegen kommt, aus einer Feder, welche das Gehäuse federnd beaufschlägt, und einer am Rad zu befestigenden Halterung.

Bei der bekannten Anordnung wird das Gehäuse einer Vorrichtung zum Messen des Reifendrucks an einem durch eine Felge des Rades hindurchgreifenden Ventil mittels einer Blattfeder befestigt, welche mit einem gabelförmig ausgebildeten Ende den Ventilschaft umgreift und mit ihrem anderen Ende um das Gehäuse herumgreift, so dass das Gehäuse von der Blattfeder gegen das Felgenbett und den Ventilfuß gedrückt wird.

Die Befestigung des Gehäuses einer Vorrichtung zum Messen des Reifendrucks mittels einer Blattfeder bietet gegenüber dem Verschweißen oder Verkleben des Gehäuses mit dem Felgenbett den Vorteil, dass eine Demontage bei einem Wechsel der Felgen leicht möglich ist. Auch ist die bekannte Befestigungsmöglichkeit mit einer Blattfeder weniger aufwendig und kostengünstiger als die Montage mit einem Spannband, welches die Felge in Umfangsrichtung umschließt. Es hat sich jedoch gezeigt, dass sich die in der DE 101 311 411 A1 beschriebene Anordnung nicht für alle Felgenformen gleichermaßen eignet. Hinzu kommt, dass ein Montagefehler, insbesondere ein nicht richtiges Verrasten der Blattfeder mit dem Gehäuse und dem Ventilschaft leicht übersehen werden kann, so dass dann keine zuverlässige Befestigung des Gehäuses am Rad gewährleistet ist.

Aufgabe der Erfindung ist es daher, einen Weg aufzuzeigen, wie ein Gehäuse mit einer Vorrichtung zum Messen des Reifendruckes an unterschiedlichen Felgen für luftbereifte Räder preiswert und zuverlässig befestigt werden kann und dabei Montagefehler weitgehend ausgeschlossen werden können.

Diese Aufgabe wird durch eine Anordnung mit den im Anspruch 1 angegebenen Merkmalen sowie durch ein Rad mit den im Anspruch 17 angegebenen Merkmalen gelöst. Vorteilhafte Weiterbildungen der Erfindung sind Gegenstand der Unteransprüche.

Bei der erfindungsgemäßen Anordnung ist die Feder als eine drahtförmige Spannfeder ausgebildet, welche die Halterung umgibt und mit ihren Schenkeln das Gehäuse an das Rad drückt. Eine drahtförmige Spannfeder, welche die Halterung umgibt, hat den Vorteil sehr kostengünstig zu sein und erlaubt zudem eine einfache Montage, beispielsweise durch einfaches Aufstecken auf die Halterung. Ein eventueller Montagefehler kann dabei leicht erkannt und korrigiert werden.

Ein weiterer Vorteil der Verwendung einer erfindungsgemäßen Drahtfeder besteht darin, dass einfacher als mit einer Blattfeder gemäß der DE 101 31 411 A1 eine höhere Anpresskraft auf die Felge erzielt wird. Bei einer Blattfeder müßte wegen des vergleichsweise langen Hebelarms der Blattfeder zur Erhöhung der Anpresskraft eine steifere Blattfeder eingesetzt werden, wodurch die Montage erschwert würde, weil eine steifere Feder zu höheren Kraftaufwendungen bei der Montage führt.

Bei einer erfindungsgemäßen Anordnung lassen sich durch die Schenkel der drahtförmigen Spannfeder, beispielsweise indem die Feder im vorgespannten Zustand auf die Halterung aufgesteckt wird, ohne weiteres auf das Gehäuse der Vorrichtung zum Messen des Reifendrucks so hohe Anpresskräfte ausüben, dass ein Abheben des Gehäuses vom Rad auch bei hohen Radgeschwindigkeiten ausgeschlossen ist. Auf diese Art und Weise läßt sich eine zuverlässige Befestigung des Gehäuses der Vorrichtung zum Messen des Reifendrucks erreichen.

Im einfachsten Fall kann die Spannfeder als ein U oder V-förmiges Drahtstück ausgebildet sein, welches mit seiner Biegung die Halterung umgibt und dort an ihr anliegt. Bevorzugt weist die Feder aber eine Wendel auf. Durch eine solche Wendel kann die Halterung hindurch greifen, so dass diese rundum von der Wendel umschlossen ist. Vorteilhaft ist auf diese Art und Weise ein unbeabsichtigtes Lösen der Feder von der Halterung erschwert und so die Zuverlässigkeit der Befestigung des Gehäuses der Vorrichtung zum Messen des Reifendrucks erhöht.

Eine vorteilhafte Weiterbildung der Erfindung sieht vor, dass das Gehäuse eine Öffnung aufweist, durch welche die Halterung hindurchgreift. Diese Maßnahme hat den Vorteil, dass die Bestandteile der Anordnung, nämlich das Gehäuse, die Halterung und die Feder, noch zuverlässiger miteinander verbunden sind.

Besonders kompakt läßt sich die Anordnung ausführen, indem man das Gehäuse mit einer Ausnehmung zum Aufnehmen eines Teils der Halterung versieht. Zur weiteren Sicherung der Befestigung des Gehäuses am Rad sind bevorzugt die Schenkel der Feder formschlüssig mit dem Gehäuse verbunden. Als besonders günstig hat es sich erwiesen, wenn das Gehäuse eine Nut für die Aufnahme eines der Schenkel der Feder, vorzugsweise jeweils eine Nut für die Aufnahme der beiden Schenkel der Feder aufweist. Liegen die Schenkel in einer passenden Nut des Gehäuses, so wird ein Verrutschen derselben erschwert, was die Zuverlässigkeit der Befestigung weiter erhöht. Zudem erleichtert sich die Montage, da die optimale Position für die Schenkel der Feder durch die Nut im Gehäuse vorgegeben ist. Als zusätzliche Sicherung ist es auch vorteilhaft, wenn das Gehäuse ein Sackloch für die Aufnahme eines Endes der drahtförmigen Spannfeder, vorzugsweise jeweils ein Sackloch für die Aufnahme jeweils eines der beiden Enden der Feder aufweist.

Eine weitere vorteilhafte Weiterbildung der Erfindung sieht vor, dass die Halterung teilweise oder vollständig von einem Ventil des Luftreifens ausgebildet ist. Diese Möglichkeit wird für Tiefbettfelgen bevorzugt, welche bei Personenkraftwagen üblich sind. Bei Tiefbettfelgen steckt das Ventil in einem Loch in einer das Tiefbett begrenzenden Flanke der Felge und verläuft mit seiner Längsachse unter einem Winkel zur Vertikalen. Bei einer solchen Anordnung eignet sich der im Innern des Luftreifens liegende Ventilfuß besonders gut zum Abstützen des Gehäuses der Vorrichtung zum Messen des Reifendruckes. An dem Ventil läßt sich ein Stift oder rohrförmiger Fortsatz anbringen, auf welchen die Feder aufgesteckt ist, so dass die Anordnung mit der Felge verbunden ist. Durch einen solchen rohrförmigen Fortsatz, welcher beispielsweise als eine in einen Fuß des Ventils eingreifende Hohlschraube ausgebildet sein kann, läßt sich ein Luftkanal zur Verfügung stellen, durch welchen dem Reifen Druckluft zugeführt werden kann. Alternativ ist es möglich, als Halterung einen Stift direkt, beispielsweise durch Schweißen, am Grund der Felge anzubringen. Eine solche Befestigungsart kommt vor allem für Flachbettfelgen infrage, welche für Lastkraftwagen Verwendung finden. Dabei sollte die Halterung mit der Radachse einen Winkel < 90 °, vorzugsweise 30 ° bis 60 ° einschließen. Die Neigung kann auch gegen die Fahrtrichtung erfolgen. Bevorzugt ist es dabei, dass der Fortsatz an seinem freien Ende eine Verdickung aufweist. Durch eine solche Verdickung wird die Befestigung weiter gesichert, da diese es verhindert oder zumindest erschwert, dass die Feder über das freie Ende des Fortsatzes abrutscht. Eine solche Verdickung läßt sich beispielsweise dadurch erreichen, dass der Fortsatz umgebördelt wird. Am besten ist es, wenn die Halterung formschlüssig mit der aufgesteckten Feder verbunden ist. Dies läßt sich beispielsweise auch dadurch erreichen, dass die Halterung Rillen zur Aufnahme der drahtförmigen Feder bzw. deren Wendel aufweist.

Wird die Halterung teilweise oder vollständig von einem Ventil des Luftreifens ausgebildet, so wird dieses bevorzugt mit einer Querbohrung versehen. Durch eine Querbohrung, insbesondere an einem Kugelkopf des Ventils, läßt sich ein Luftkanal zur Verfügung stellen, durch welchen die Druckluft dem Reifen zugeführt werden kann. Ein Luftkanal, welcher durch das Gehäuse der Vorrichtung zum Messen des Reifendrucks hindurchführt, wird dann vorteilhaft nicht mehr benötigt, was die Konstruktion vereinfacht und kostengünstiger macht. Insbesondere kann dann der Fortsatz der Halterung als eine gewöhnliche Schraube ausgebildet sein, was kostengünstiger als ein rohrförmiger Fortsatz oder eine Hohlschraube ist, welche ein Durchleiten von Luft erlauben. Vorteilhaft können die Windungen der Schraube der Biegung der drahtförmigen Feder, bzw. deren Wendel Halt geben und gegen Verrutschen zusätzlich sichern.

Zum Abstützen des Gehäuses auf dem Felgenbett hat das Gehäuse an seiner Unterseite zweckmäßigerweise zwei von der Unterseite vorspringende Füße, welche auf unterschiedlichen Seiten der Mittelebene des Gehäuses liegen. Auf diese Weise läßt sich eine stabile Dreipunktlagerung des Gehäuses verwirklichen: Zwei Lagerpunkte befinden sich auf dem Felgenbett und der dritte Lagerpunkt an der Halterung.

Vorteilhafte Ausführungsbeispiele der Erfindung sind schematisch in den beigefügten Zeichnungen dargestellt. Gleiche oder einander entsprechende Teile sind in den verschiedenen Ausführungsbeispielen mit übereinstimmenden Bezugszahlen bezeichnet.
- Figur 1: zeigt ein erstes Ausführungsbeispiel einer Anordnung aus einem Gehäuse für eine Vorrichtung zum Messen des Reifendrucks, einer Feder und einem Ventil in Einbaulage an einer Tiefbettfelge
- Figuren 2 und 3: zeigen abgewandelte Ausführungsbeispiele für die Halterung eines Gehäuses an einer Tiefbettfelge,
- Figur 4: zeigt eine teilweise geschnittene Explosionsdarstellung der Anordnung aus Figur 1,
- Figur 5: zeigt eine Ansicht des Gehäuses aus Figur 1, und zwar auf die Seite, von welcher das Ventil eingesetzt wird,
- Figur 6: zeigt eine besonders für Flachbettfelgen geeignete Anordnung aus einer stiftförmigen Halterung und einem Gehäuse für eine Vorrichtung zum Messen des Reifendrucks in einer Schrägansicht und
- Figur 7: zeigt diese Anordnung in einem Vertikalschnitt.

Gleiche oder einander entsprechende Teile sind in den Ausführungsbeispielen mit übereinstimmenden Bezugszahlen bezeichnet.

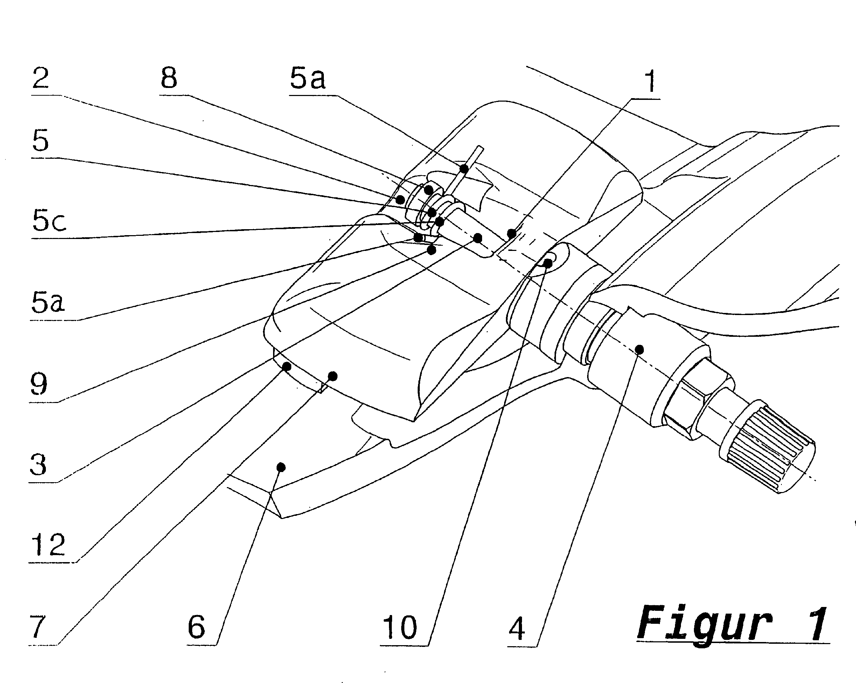

Die in Figur 1 dargestellte Anordnung besteht aus einem Gehäuse 7, in welchem sich eine Vorrichtung zum Messen des Reifendrucks befindet, aus einer Feder 5 und aus einem Ventil 4 mit einem stiftförmigen Fortsatz 3. Das Ventil 4 bildet zusammen mit dem Fortsatz 3 eine an der Felge des Rades 6 befestigte Halterung für das Gehäuse 7 und die Feder 5. Die Feder 5 ist als eine drahtförmigen Spannfeder ausgebildet, welche den Fortsatz 3 mit einer Wendel 5c umgibt und bei der Montage auf den Fortsatz 3 aufgesteckt wurde. Um zu verhindern, dass sich die Feder 5 nach der Montage unbeabsichtigt von dem Fortsatz 3 löst, ist sie mit diesem formschlüssig verbunden. Zu diesem Zweck weist der Fortsatz 3 Rillen 14 auf, in welche die Wendel 5c der drahtförmigen Spannfeder 5 zu liegen kommt. Ferner weist der Fortsatz 3 des Ventils 4 an seinem freien Ende einen Kragen oder eine andere Verdickung 8 auf, welche verhindert, dass sich die Feder 5 unbeabsichtigt von dem Fortsatz 3 löst.

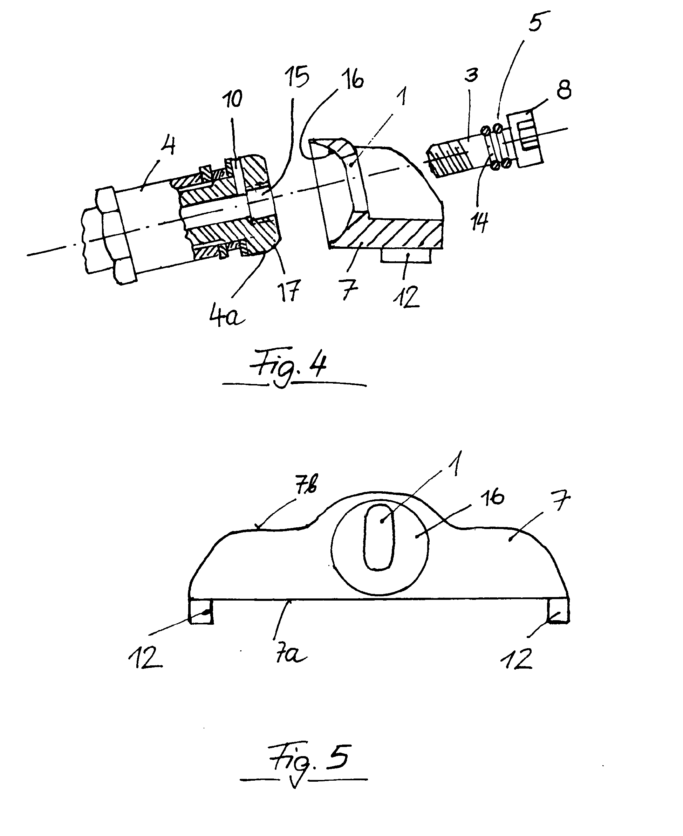

Das Ventil 4 ist mit einer Längsbohrung 15 und mit einer zu dieser führenden Querbohrung 10 versehen, welche einen Luftkanal zur Verfügung stellt, durch welche die Druckluft dem Reifen zugeführt werden kann. Ein Luftkanal, welcher durch das Gehäuse 7 der Vorrichtung zum Messen des Reifendrucks hindurch führt, wird deshalb nicht benötigt, so dass der Fortsatz 3 als eine gewöhnliche Schraube ausgebildet sein kann, welche mit dem Fuß 4a des Ventils 4 verschraubt ist. Im gezeichneten Beispiel ist die Schraube in die Längsbohrung 15 des Ventils gedreht und der Kopf der Schraube bildet die Verdickung 8 (Figur 4).

Die drahtförmige Spannfeder 5 wird im vorgespannten Zustand auf den Fortsatz 3 des Ventils 4 aufgesteckt, so dass die Schenkel 5a der drahtförmigen Spannfeder 5 auf das Gehäuse 7 der Vorrichtung zum Messen des Reifendrucks so hohe Anpresskräfte ausüben, dass ein Abheben des Gehäuses 7 vom Rad 6 im Straßenverkehr auch bei hohen Radgeschwindigkeiten ausgeschlossen ist. Im montierten Zustand kommen die Schenkel 5a der Feder 5 jeweils in einer dafür vorgesehenen Nut 9 zu liegen und sind so zusätzlich gegen ein Verrutschen gesichert.

Der Fortsatz 3 des Ventils 4 greift durch eine Öffnung 1 des Gehäuses 7, welche beispielsweise als ein Langloch ausgeführt sein kann, hindurch und ruht in einer Ausnehmung 2 des Gehäuses 7. Das Langloch 1 erstreckt sich in Richtung von der Gehäuseunterseite 7a zur Gehäuseoberseite 7b und liegt in einer dem Ventil 4 zugewandten Mulde 16 des Gehäuses 7 (Figuren 4 und 5). Die Oberfläche der Mulde 16 hat die Gestalt eines Ausschnitts aus einer Kugelfläche und nimmt den Fuß 4a des Ventils 4 auf, welcher eine zur Mulde 16 passende Kugelkalotte 17 hat. Unter der Einwirkung der Feder 5 bewegt sich das Gehäuse 7 auf der Kugelkalotte 17 in eine stabile Lage auf der Felge.

Durch dieses Ineinandergreifen des Gehäuses 7 und der aus dem Fortsatz 3 und dem Ventil 4 gebildeten Halterung wird die Befestigung des Gehäuses 7 an der Felge des Rades 6 vorteilhaft unterstützt.

Die Ausnehmung 2 des Gehäuses 7 ist mittig vorgesehen und das Gehäuse 7 in Bezug auf diese Ausnehmung 2 im wesentlichen spiegelsymmetrisch. Auf diese Art und Weise werden beide Seiten des Gehäuses 7 von den beiden Schenkeln 5a der Feder 5 gleichermaßen gegen die Felge des Rades 6 gedrückt. Das Gehäuse 7 ist an seiner Unterseite mit zwei von ihr vorspringenden Füßen 12 versehen, welche auf unterschiedlichen Seiten der Mittelebene des Gehäuses 7 liegen. Zusammen mit der aus dem Ventil 4 und seinem Fortsatz 3 gebildeten Halterung wird so eine stabile Dreipunktlagerung des Gehäuses 7 auf der Felge des Rades 6 erreicht.

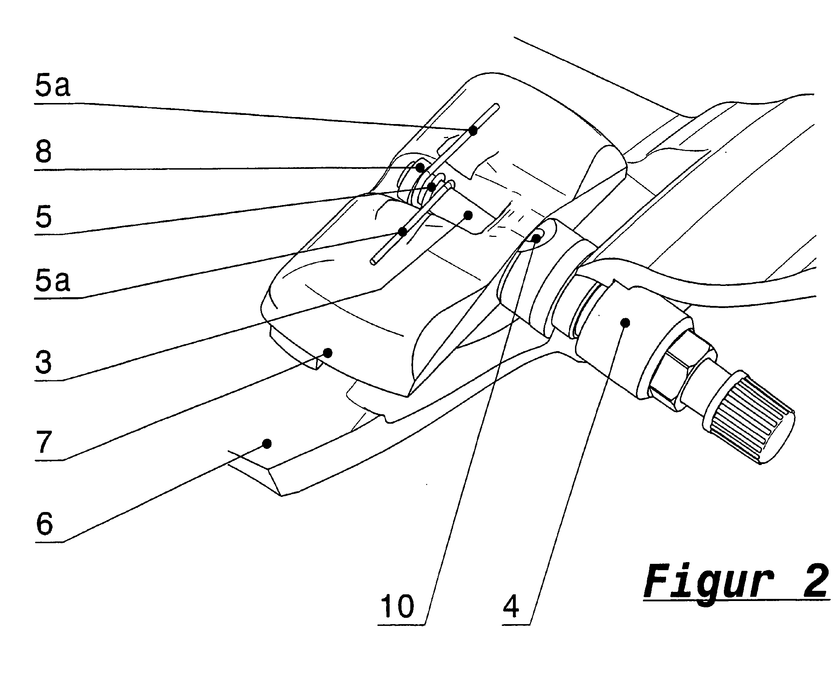

Das in Figur 2 dargestellte Ausführungsbeispiel unterscheidet sich von dem in Figur 1 gezeigten Ausführungsbeispiel im wesentlichen dadurch, dass die Schenkel 5a der Feder 5 nicht wie bei Figur 1 in einem Winkel zueinander stehen, sondern im wesentlichen parallel zueinander verlaufen und beide direkt von oben auf das Gehäuse 7 drücken, was vorteilhaft zu höheren Anpresskräften führt.

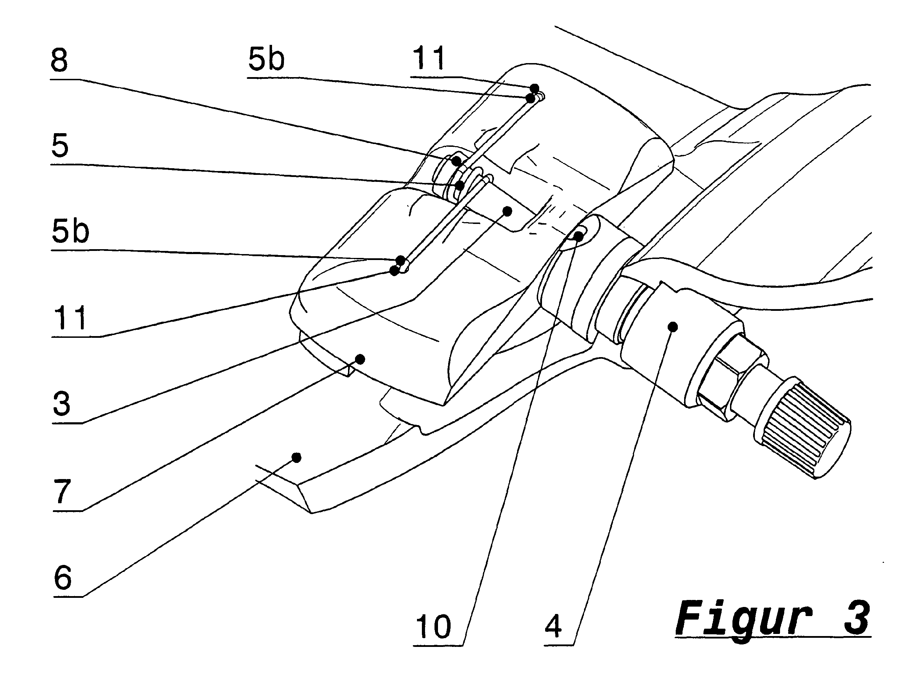

Das in Figur 3 gezeigte Ausführungsbeispiel unterscheidet sich von dem in Figur 2 gezeigten Ausführungsbeispiel dadurch, dass das Gehäuse 7 zwei Sacklöcher 11 aufweist, welche die Enden 5b der drahtförmigen Spannfeder 5 aufnehmen. Hierfür sind die Enden 5b der drahtförmigen Spannfeder 5 umgebogen, um einen besseren Eingriff in die Sacklöcher 11 zu erlauben. Auf diese Art und Weise wird ein Formschluß zwischen der Feder 5 und dem Gehäuse 7 erzeugt, welcher die Anordnung zusätzlich gegen ein Verrutschen der Feder 5 gegenüber dem Gehäuse 7 oder dem Fortsatz 3 des Ventils 4 sichert.

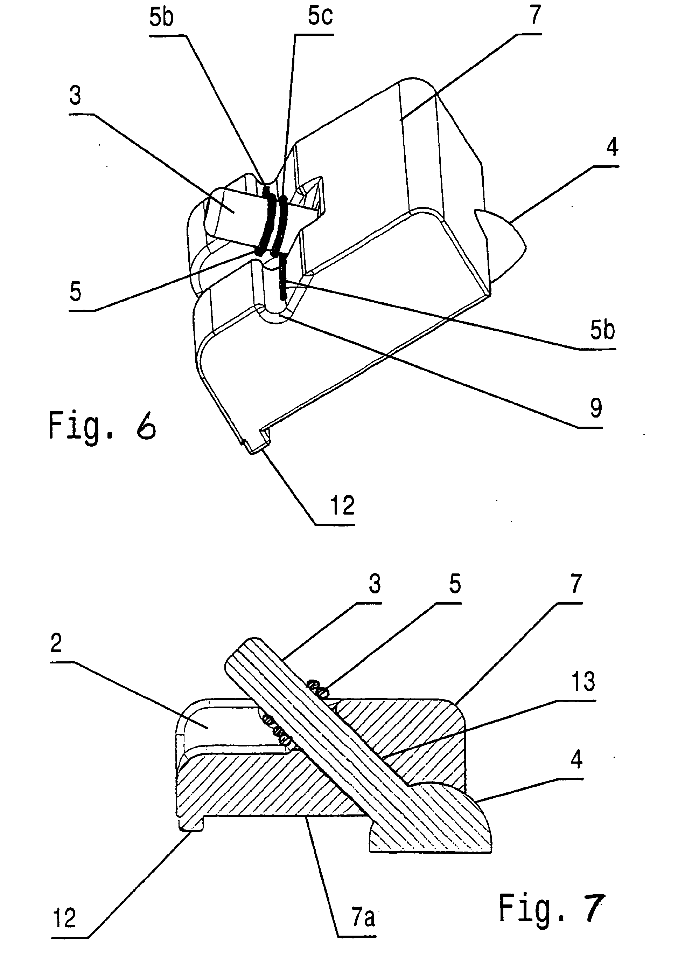

Bei dem in den Figuren 6 und 7 dargestellten Ausführungsbeispiel hat das Gehäuse 7 eine hauptsächlich ebene Unterseite 7a. Unter einem Winkel zur Unterseite 7a, der zwischen 30 ° und 60 ° beträgt, verläuft durch das Gehäuse 7 eine Bohrung 13, in welcher eine Halterung 4 steckt, welche aus einem Fuß 4a mit einer als Kugelkalotte 17 ausgebildeten Oberseite und einem davon ausgehenden, stab- oder stiftförmigen Fortsatz 3 besteht, welcher in der Bohrung 13 steckt, welche in eine Mulde 16 mündet, deren Oberfläche die Gestalt einer zur Kugelkalotte 17 passenden Kugelflächenausschnitts hat. Der Fortsatz 3 nimmt eine Feder 5 mit einer Wendel 5c auf, deren Schenkel 5a in einer Nut 9 zu liegen kommen, welche sich in der Oberseite des Gehäuses 7 befindet. Die Schenkel 5a drücken das Gehäuse 7 nach unten, nämlich gegen ein Felgenbett, mit welchem der Fuß 4a der Halterung 4 mit seiner Unterseite fest zuverbinden ist, zum Beispiel verschweißt sein kann. Diese Ausführungsform eignet sich besonders für Flachbettfelgen.

### Bezugszeichenliste:

- 1.: Öffnung, Langloch
- 2.: Ausnehmung
- 3.: Fortsatz der Halterung
- 4.: Ventil bzw. Halterung
- 4a.: Fuß des Ventils bzw. der Halterung 4
- 5.: Feder
- 5a.: Schenkel
- 5b.: Ende
- 5c.: Wendel
- 6.: Rad
- 7.: Gehäuse
- 7a.: Unterseite des Gehäuses
- 7b.: Oberseite des Gehäuses
- 8.: Verdickung
- 9.: Nut
- 10.: Querbohrung
- 11.: Sackloch
- 12.: Füße
- 13.: Bohrung
- 14.: Rillen auf 3
- 15.: Längsbohrung im Ventil
- 16.: Mulde
- 17.: Kugelkalotte

## Patentansprüche

1. Anordnung aus einer Vorrichtung zum Messen des Reifendrucks in einem Luftreifen, welche sich in einem Gehäuse (7) befindet, das nach der Montage des Luftreifens auf einem Rad (6) im Luftreifen zu liegen kommt, aus einer Feder (5), welche das Gehäuse (7) federnd beaufschlägt, und einer am Rad (6) zu befestigenden Halterung (3, 4), wobei die Feder (5) als eine drahtförmige Spannfeder ausgebildet ist, welche die Halterung (3, 4) umgibt und mit ihren Schenkeln (5a) das Gehäuse (7) an das Rad (6) drückt, **dadurch gekennzeichnet, dass** die Halterung (3, 4) von einem stift- oder rohrförmigem Fortsatz (3) eines Ventils gebildet ist.

2. Anordnung nach Anspruch 1, **dadurch gekennzeichnet**, die Feder (5) eine Wendel (5c) aufweist, welche die Halterung (3, 4) umschließt.

3. Anordnung nach einem der vorstehenden Ansprüche, **dadurch gekennzeichnet, dass** das Gehäuse (7) eine Öffnung (1) aufweist, durch welche die Halterung (3, 4) hindurch greift.

4. Anordnung nach einem der vorstehenden Ansprüche, **dadurch gekennzeichnet, dass** das Gehäuse (7) eine Ausnehmung (2) zum Aufnehmen eines Teils (3) der Halterung (3, 4) hat.

5. Anordnung nach einem der vorstehenden Ansprüche, **dadurch kennzeichnet, dass** die Schenkel (5a) formschlüssig mit dem Gehäuse (7) verbunden sind.

6. Anordnung nach einem der vorstehenden Ansprüche, **dadurch gekennzeichnet, dass** das Gehäuse (7) eine Nut (9) für die Aufnahme eines der Schenkel (5a) der Feder (5), vorzugsweise jeweils eine Nut (9) für die Aufnahme der beiden Schenkel (5a) der Feder (5) aufweist.

7. Anordnung nach einem der vorstehenden Ansprüche, **dadurch gekennzeichnet, dass** das Gehäuse (7) ein Sackloch (11) für die Aufnahme eines Endes (5b) der drahtförmigen Spannfeder (5), vorzugsweise jeweils ein Sackloch (11) für die Aufnahme jeweils eines der beiden Enden (5b) der drahtförmigen Spannfeder (5) aufweist.

8. Anordnung nach einem der vorstehenden Ansprüche, **dadurch gekennzeichnet, dass** die Halterung (3, 4) teilweise oder vollständig von einem Ventil (4) des Luftreifens gebildet ist.

9. Anordnung nach einem der vorstehenden Ansprüche, **dadurch gekennzeichnet, dass** die Feder (5) auf den stift-oder rohrförmigen Fortsatz (3) aufgesteckt ist.

10. Anordnung nach Anspruch 9, **dadurch gekennzeichnet, dass** der Fortsatz (3) an seinem freien Ende eine Verdickung (8) aufweist.

11. Anordnung nach einem der vorstehenden Ansprüche, **dadurch gekennzeichnet, dass** die Halterung (3, 4) formschlüssig mit der aufgesteckten Feder (5) verbunden ist.

12. Anordnung nach einem der vorstehenden Ansprüche, **dadurch gekennzeichnet, dass** die Halterung (3, 4) Rillen (14) zur Aufnahme der drahtförmigen Feder (5) aufweist.

13. Anordnung nach einem der vorstehenden Ansprüche und Anspruch 8, **dadurch gekennzeichnet, dass** das Ventil (4) eine Querbohrung (10) aufweist.

14. Anordnung nach einem der vorstehenden Ansprüche, **dadurch gekennzeichnet, dass** der Fortsatz (3) der Halterung (3, 4) als Schraube ausgebildet ist.

15. Anordnung nach einem der vorstehenden Ansprüche, **dadurch gekennzeichnet, dass** die Ausnehmung (2) des Gehäuses (7) zum Aufnehmen eines Teils (3) der Halterung (3, 4) mittig angeordnet ist.

16. Anordnung nach Anspruch 15, **dadurch gekennzeichnet, dass** das Gehäuse (7) in Bezug auf die Ausnehmung (2) im wesentlichen spiegelsymmetrisch ist.

17. Anordnung nach einem der vorstehenden Ansprüche, **dadurch gekennzeichnet, dass** das Gehäuse (7) hauptsächlich eine i. w. ebene Unterseite hat, zu welcher die Halterung (3, 4) schräg verläuft und durch sie hindurch durchtritt.

18. Rad für Fahrzeuge mit Luftreifen
- mit einer Vorrichtung zum Messen des Reifendrucks in dem Luftreifen, welche sich in einem Gehäuse (7) befindet,
- mit einer Feder (5), welche das Gehäuse (7) federnd beaufschlagt,
- und mit einer am Rad (6) befestigten Halterung (3, 4), **dadurch gekennzeichnet, dass** das Gehäuse (7), die Feder (5) und die Halterung (3, 4) eine Anordnung nach einem der vorgehenden Ansprüche bilden.

19. Rad nach Anspruch 18, **dadurch gekennzeichnet, dass** sich das Gehäuse (7) nur an der Halterung (3, 4) und am Grund eines Felgenbetts des Rades (6) abstützt.

20. Rad nach Anspruch 19, **dadurch gekennzeichnet, dass** sich das Gehäuse (7) mit zwei Füßen (12) am Grund des Felgenbetts abstützt.

21. Rad nach Anspruch 19 oder 20, **dadurch gekennzeichnet, dass** die Halterung einen Fuß (4a) hat, welcher am Grund des Felgenbetts des Rades (6) befestigt ist, und einen stab- oder stiftförmigen Fortsatz (3) hat, welcher gegen die Tangentialebene des Felgenbettes am Befestigungspunkt des Fußes (4a) geneigt ist, vorzugsweise mit einem Neigungswinkel von 30 ° bis 60 ° gegen die Tangentialebene.

## Claims

1. Arrangement comprising an apparatus for measuring tire pressure in an air-filled tire, that is arranged in a housing (7) that, after mounting of the pneumatic tire on a wheel (6), is disposed in the pneumatic tire, a spring (5) that impinges upon the housing in a resilient manner, and a mounting (3, 4) to be fastened to the wheel (6), wherein the spring (5) is configured as a wire-shaped tension spring that encompasses the mounting (3, 4) and which presses with its legs (5a) the housing (7) against the wheel (6), **characterized in that** the mounting (3, 4) is formed by a pin-shaped or tubular extension (3) of a valve.

2. Arrangement according to claim 1, **characterized in that** the spring (6) comprises a helix (5c) that encompasses the mounting (3, 4).

3. Arrangement according to any of above claims, **characterized in that** the housing (7) is provided with an aperture (1) through which the mounting (3, 4) protrudes.

4. Arrangement according to any of above claims, **characterized in that** the housing (7) is provided with a recess (2) for housing of a part (3) of the mounting (3, 4).

5. Arrangement according to any of above claims, **characterized in that** the legs (5a) are fastened to the housing (7) in an interlocking manner.

6. Arrangement according to any of above claims, **characterized in that that** housing (7) is provided with a groove (9) for insertion of one of the legs (5a) of the spring (5), preferably one groove (9) each for insertion of one of the two legs (5a) of the spring (5).

7. Arrangement according to any of above claims, **characterized in that** the housing (7) is provided with a blind hole (11) for insertion of an end (5b) of the wire-like tension spring (5), preferably one blind hole (11) each for insertion of one of the two ends (5b) of the wire-shaped tension spring (5).

8. Arrangement according to any of above claims, **characterized in that** the mounting (3, 4) is partially or completely formed by a valve (4) of the pneumatic tire.

9. Arrangement according to any of above claims, **characterized in that** the spring (5) is slipped over the pin-shaped or tubular extension (3).

10. Arrangement according to claim 9, **characterized in that** the extension (3) is provided at its free end with a thickening (8).

11. Arrangement according to any of above claims, **characterized in that** the mounting (3, 4) is connected to the slipped-on spring (5) in an interlocking manner.

12. Arrangement according to any of above claims, **characterized in that** the mounting (3, 4) is provided with grooves (14) for insertion of the wire-shaped spring (5).

13. Arrangement according to any of above claims, **characterized in that** the valve (4) is provided with a cross boring (10).

14. Arrangement according to any of above claims, **characterized in that** the extension (3) of the mounting (3, 4) is configured as a screw.

15. Arrangement according to any of above claims, **characterized in that** the recess (2) of the housing (7) for insertion of a part (3) of the mounting (3, 4) is centrally located.

16. Arrangement according to any of above claims, **characterized in that** the housing (7) is essentially mirror symmetric with respect to the recess (2).

17. Arrangement according to any of above claims, **characterized in that** the housing (7) basically has a generally plane bottom side with respect to which the mounting (3, 4) runs in an oblique manner and extends through it.

18. A wheel for vehicles with pneumatic tires:
- with a device for measuring tire pressure in the pneumatic tire, which device is located in a housing (7);
- with a spring (5) that impinges upon the housing (7) in a resilient manner;
- and with a mounting (3, 4) fastened to the wheel (6), **characterized in that** the housing (7), the spring (5) and the mounting (3, 4) form an arrangement according to any of above claims.

19. A wheel according to claim 18, **characterized in that** the housing (7) rests only at the mounting (3, 4) and at the bottom of the well of the rim of the wheel (8).

20. A wheel according to claim 19, **characterized in that** the housing (7) rests with two legs (12) at the bottom of the well of the rim.

21. A wheel according to claim 19 or 20, **characterized in that** the mounting is provided with a leg (4a), that is fastened at the bottom of the well of the rim of the wheel (6), and is provided with a rod-like or pin-like extension (3) that is inclined towards the tangential plane of the well of the rim at the fastening point of the leg (4a), preferably at an angle of inclination of 30° to 60° with respect to the tangential plane.

## Revendications

1. Agencement constitué par un dispositif pour la mesure de la pression de gonflage dans un bandage pneumatique, qui se trouve dans un boîtier (7) qui, après le montage du bandage pneumatique sur une roue (6), se retrouve dans le bandage pneumatique, par un ressort (5) qui vient solliciter le boîtier (7) de manière élastique, et par un support (3, 4) destiné à venir se fixer contre la roue (6), le ressort (5) étant réalisé à la manière d'un ressort de tension en forme d'un fil métallique, qui entoure le support (3, 4) et qui comprime avec ses branches (5a) le boîtier (7) contre la roue (6), **caractérisé en ce que** le support (3, 4) est formé par un prolongement (3) d'une valve, en forme de tige ou de forme tubulaire.

2. Agencement selon la revendication 1, **caractérisé en ce que** le ressort (5) présente une spirale (5c) qui entoure le support (3, 4).

3. Agencement selon l'une quelconque des revendications précédentes, **caractérisé en ce que** le boîtier (7) présente une ouverture (1) que traverse le support (3,4).

4. Agencement selon l'une quelconque des revendications précédentes, **caractérisé en ce que** le boîtier (7) possède un évidement (2) pour la réception d'une partie (3) du support (3, 4).

5. Agencement selon l'une quelconque des revendications précédentes, **caractérisé en ce que** les branches (5a) sont reliées au boîtier (7) par complémentarité de forme.

6. Agencement selon l'une quelconque des revendications précédentes, **caractérisé en ce que** le logement (7) présente une rainure (9) pour la réception d'une des branches (5a) du ressort (5), de préférence respectivement une rainure (9) pour la réception des deux branches (5a) du ressort (5).

7. Agencement selon l'une quelconque des revendications précédentes, **caractérisé en ce que** le boîtier (7) présente un trou borgne (11) pour la réception d'une extrémité (5b) du ressort de tension (5) en forme de fil métallique, de préférence respectivement un trou borgne (11) pour la réception respectivement d'une des deux extrémités (5b) du ressort de tension (5) en forme de fil métallique.

8. Agencement selon l'une quelconque des revendications précédentes, **caractérisé en ce que** le support (3, 4) est formé en partie ou en totalité par une valve (4) du bandage pneumatique.

9. Agencement selon l'une quelconque des revendications précédentes, **caractérisé en ce que** le ressort (5) est enfiché sur le prolongement en forme de tige ou de forme tubulaire.

10. Agencement selon la revendication 9, **caractérisé en ce que** le prolongement (3) présente un épaississement (8) à son extrémité libre.

11. Agencement selon l'une quelconque des revendications précédentes, **caractérisé en ce que** le support (3, 4) est relié au ressort enfiché (5) par complémentarité de forme.

12. Agencement selon l'une quelconque des revendications précédentes, **caractérisé en ce que** le support (3, 4) présente des rainures (14) pour la réception du ressort (5) en forme de fil métallique.

13. Agencement selon l'une quelconque des revendications précédentes et selon la revendication 8, **caractérisé en ce que** la valve (4) présente un alésage transversal (10).

14. Agencement selon l'une quelconque des revendications précédentes, **caractérisé en ce que** le prolongement (3) du support (3, 4) est réalisé sous la forme d'une vis.

15. Agencement selon l'une quelconque des revendications précédentes, **caractérisé en ce que** l'évidement (3) du boîtier (7) est disposé en position centrale pour la réception d'une partie (3) du support (3, 4).

16. Agencement selon la revendication 15, **caractérisé en ce que** le boîtier (7) présente essentiellement une symétrie spéculaire par rapport à l'évidement (2).

17. Agencement selon la revendication 9, **caractérisé en ce que** le boîtier (7) possède principalement un côté inférieur essentiellement plan, par rapport auquel s'étend le support (3, 4) en inclinaison et le traverse.

18. Roue pour des véhicules automobiles à bandages pneumatiques comprenant :
- un dispositif pour la mesure de la pression de gonflage dans le bandage pneumatique, qui se trouve dans un boîtier (7) ;
- un ressort (5) qui sollicite le boîtier (7) de manière élastique ; et
- un support fixé à la roue (6),
**caractérisée en ce que** le boîtier (7), le ressort (5) et le support (3, 4) forment un agencement selon l'une quelconque des revendications précédentes.

19. Roue selon la revendication 18, **caractérisée en ce que** le boîtier (7) s'appuie uniquement contre le support (3, 4) et contre la base du creux de jante de la roue (6).

20. Roue selon la revendication 19, **caractérisée en ce que** le boîtier vient s'appuyer avec deux pieds (12) contre la base du creux de jante.

21. Roue selon la revendication 19 ou 20, **caractérisée en ce que** le support possède un pied (4a) qui est fixé à la base du creux de jante de la roue (6) et un prolongement (3) en forme de barre ou en forme de tige, qui est incliné par rapport au plan tangentiel du creux de jante au point de fixation du pied (4a), de préférence en formant un angle d'inclinaison de 30° à 60° par rapport au plan tangentiel.
